# EUROPEAN PATENT SPECIFICATION

(11) **EP 2 432 273 B1**
(45) Date of publication and mention of the grant of the patent: **24.12.2014**
(21) Application number: 10777341.8
(22) Date of filing: 10.05.2010
(51) Int. Cl.: H04W 24/10

(54) **METHOD AND SYSTEM FOR REPORTING MEASUREMENT REPORT BETWEEN NETWORK ELEMENTS**
VERFAHREN UND SYSTEM ZUR ERSTELLUNG VON MESSBERICHTEN ZWISCHEN NETZWERKELEMENTEN
PROCÉDÉ ET SYSTÈME ADAPTÉS POUR LA COMMUNICATION DE RAPPORT DE MESURE ENTRE DES ÉLÉMENTS DE RÉSEAU

(30) Priority: 18.05.2009 CN 200910084575
(43) Date of publication of application: 21.03.2012
(73) Proprietor: ZTE Corporation, Shenzhen, Guangdong 518057 (CN)
(72) Inventor: XU, Xibao, Shenzhen Guangdong 518057 (CN); SONG, Luoting, Shenzhen Guangdong 518057 (CN); HUANG, He, Shenzhen Guangdong 518057 (CN); CONG, Jin, Shenzhen Guangdong 518057 (CN)
(74) Representative: Manitz, Finsterwald & Partner GbR
(86) International application number: PCT/CN2010/072566
(87) International publication number: WO 2010/133138

(56) References cited:
- WO-A1-2009/022805
- CN-A- 1 533 193
- CN-A- 1 972 490
- CN-A- 101 111 084
- US-A1- 2008 109 205
- ZTE: "Deactivation of periodical measurement", 3GPP DRAFT; R2-091223 DEACTIVATION OF PERIODICAL MEASUREMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Athens, Greece; 20090203, 3 February 2009 (2009-02-03), XP050323316, [retrieved on 2009-02-03]
- HILTUNEN K ET AL: "Comparison between the periodic and event-triggered intra-frequency handover measurement reporting in WCDMA", WIRELESS COMMUNICATIONS AND NETWORKING CONFERNCE, 2000. WCNC. 2000 IEE E 23-28 SEPTEMBER 2000, PISCATAWAY, NJ, USA,IEEE, vol. 2, 23 September 2000 (2000-09-23), pages 471-475, XP010532293, ISBN: 978-0-7803-6596-4

## Description

### Technical Field

The present invention relates to the mobile communication field, and particularly, to a method and system for reporting a measurement report between network elements. The features of the preamble of the independent claims are known WO 2009/022805 A1. Related technologies are also known from documents ZTE: "Deactivation of periodical measurement", 3GPP DRAFT, R2-091223, 3 February 2009, XP050323316 and HILTUNEN K ET AL: "Comparison between the periodic and event-triggered intra-frequency handover measurement reporting in WCDMA", WCNC. 2000 IEEE, 23 September 2000, XP010532293.

### Background of the Related Art

In the communication field, and particularly in the mobile communication system, in order to obtain the state of resources in time, network elements obtain related information through a measurement process. The network elements using the measurement information are called the measurement initiating party, which initiates the measurement process to other network elements by sending the measurement initialization request, and the network elements receiving the measurement initialization request are called the measurement executing party, and if the executing party supports the requested measurement type, then the executing party reports when the condition is satisfied according to the reporting way of the measurement report indicated in the measurement initialization request.

In the mobile communication system, for example the Universal Mobile Telecommunications System (UMTS), a great quantity of reporting ways of the measurement report are defined, including the immediate reporting, periodical reporting, modification reporting, various events reporting and so on.

Different measurement reports can satisfy different scenario requirements, for example when the modification reporting way is used, the reporting occurs only when the measurement value of the measurement object in the measurement executing party changes. The event reporting way is to report only when the measurement absolute value of the measurement object in the measurement executing party satisfies a certain condition. The timeliness of the event reporting way is worse, and the measurement initiating party is unable to accurately know the current measurement value of the measurement object, but the drawback of the modification reporting way is that any change of the measurement object will trigger the measurement report, and when the measurement for the measurement object is sensitive, the message amount of the measurement report is very large.

The periodical measurement reporting is another common reporting way of the measurement report, and the initiating party of the measurement report can obtain the required measurement information in the required granularity according to the requirements. However, this reporting way has one drawback that if the measurement reporting period is set too small, then it will cause overlarge message amount of the system, particularly when the measurement report does not change or has a small change so that the measurement initiating party does not need to care about the change, the message load of the system is wasted, but when the measurement reporting period is too large, the measurement report is caused to lose the timeliness.

### Summary of the Invention

In view of this, one of the main objects of the present invention is to provide a method for reporting a measurement report between network elements, which is used for solving the technical drawbacks of the contingent overlarge message amount when applying the periodical reporting way and the bad timeliness when applying the event reporting way. In order to achieve the above object, the technical scheme of the present invention is defined in the independent method claim.

A method for reporting a measurement report between network elements comprises:
a measurement reporting party judging whether a difference of a current measurement report and a history measurement report maintained in local is within a fluctuation threshold, if yes, not reporting a measurement report to a measurement initiating party; or else the measurement reporting party reporting said current measurement report to the measurement initiating party, and at a same time, updating a value of said current measurement report into the history measurement report maintained in local.

Furthermore, the method further comprises:
before said measurement reporting party performing said judging, the measurement initiating party sending an initialization request message to the measurement reporting party, and this message carrying a measurement report fluctuation threshold field and a measurement reporting period field;
the measurement reporting party collecting measurement report information when the measurement reporting period is expired or before the measurement reporting period is expired every time, judging whether the difference between the current measurement report and the history measurement report maintained in local is within a range of a measurement report fluctuation threshold when the measurement reporting period is expired, and if yes, the measurement reporting party not reporting this measurement report to the measurement initiating party when the measurement reporting period is expired; or else the measurement reporting party reporting the measurement report to the measurement initiating party when the measurement reporting period is expired.

Furthermore, the initialization request message sent by the measurement initiating party to the measurement reporting party further carries a measurement reporting long period field, said measurement reporting long period is greater than or equal to said measurement reporting period;
the measurement reporting party reports the measurement report to the measurement initiating party when the measurement reporting long period is expired every time, no matter whether the difference between the current measurement report and the history measurement report maintained in local is within the range of the measurement report fluctuation threshold.

Furthermore, the method further comprises:
if said current measurement report is a measurement report obtained by the measurement reporting party for the first time, directly reporting the current measurement report, and setting the current measurement report as the history measurement report.

Another object of the present invention is to provide a system for reporting a measurement report between network elements. In order to achieve the above object, the technical scheme of the present invention is defined in the independent system claim

A system for reporting a measurement report between network elements comprises a measurement reporting party and a measurement initiating party; wherein
said measurement initiating party is for sending an initialization request message to the measurement reporting party, and this message carrying a measurement report fluctuation threshold field;
said measurement reporting party comprises:
a fluctuation threshold judgment module, which is for judging whether a difference between a current measurement report and a history measurement report is within a set measurement report fluctuation threshold range according to a value of the measurement report fluctuation threshold field in said initialization request message;
a measurement reporting module, which is for reporting a measurement report when the difference between the current measurement report and the history measurement report is not within the set measurement report fluctuation threshold range, and meanwhile, setting the current measured current measurement report as the history measurement report.

Furthermore, the initialization request message sent by the measurement initiating party to the measurement reporting party further carries a measurement reporting period field;
said measurement reporting party further comprises:
a first timer module, which is for periodically triggering said fluctuation threshold judgment module to work according to a measurement report reporting period set by said measurement reporting period field.

Furthermore, the initialization request message sent by the measurement initiating party to the measurement reporting party further carries a measurement reporting long period field;
said measurement reporting party further comprises:
a second timer module, which is for periodically triggering said measurement reporting module to compulsorily report the current measurement report according to a measurement report reporting long period set by said measurement reporting long period field.

A network element comprises
a fluctuation threshold judgment module, which is for judging whether a difference between a current measurement report and a history measurement report is within a set measurement report fluctuation threshold range according to a value of the measurement report fluctuation threshold field in an initialization request message sent by a measurement initiating party;
a measurement reporting module, which is for reporting a measurement report when the difference between the current measurement report and the history measurement report is not within the set measurement report fluctuation threshold range, and meanwhile, setting a current measured current measurement report as the history measurement report.

Furthermore, the initialization request message further carries a measurement reporting period field;
said network element further comprises:
a first timer module, which is for periodically triggering said fluctuation threshold judgment module to work according to a measurement report reporting period set by said measurement reporting period field.

Furthermore, the initialization request message further carries a measurement reporting long period field;
said network element further comprises:
a second timer module, which is for periodically triggering said measurement reporting module to compulsorily report the current measurement report according to a measurement report reporting long period set by said measurement reporting long period field.

The present invention introduces the fluctuation threshold control when periodically reporting the measurement report, when the difference between the current measurement report and the last measurement report is not large, the measurement reporting party does not need to report the measurement report to the measurement initiating party, however when the difference between the current measurement report and the last measurement report is large, then the measurement reporting party reports the current measurement report to the initiating party. Not only the timeliness of the measurement report is satisfied, but also the message amount of reporting the measurement report is reduced by this measurement reporting way. At the same time, the current measurement report is periodically and compulsorily reported by a timer with a long period, thereby ensuring the correctness of the measurement report locally maintained by the measurement initiating party.

### Brief Description of Drawings

FIG. 1 is a flow chart of initializing the load information common measurement and reporting the measurement report through the Iur-g interface according to the present invention;
FIG. 2A is flow chart of the measurement report reporting processing under the control of the timer T1 according to the present invention;
FIG. 2B is flow chart of measurement report processing triggered by the timer T2 corresponding to the long period according to the present invention;
FIG. 3 is a logical structure diagram of the system for reporting a measurement report between network elements according to the present invention.

### Preferred Embodiments of the Present Invention

In order to make the objects, the technical scheme and the advantages of the present invention clearer, below it will illustrate the present invention with reference to the accompanying drawings in detail.

There are many scenarios of reporting the measurement information in the mobile communication system, and below it will take the cell load common measurement type of the interfaces between network elements of the Base Station Controller (BSC) and the Radio network Controller (RNC) of the 3G and 2G system as an example to illustrate the practical application of the present invention.

It should be noted that the examples and features of the examples in this application can be combined with each other in the case of no conflicts. Below it will describe the present invention with reference to accompanying drawings in combination with examples.

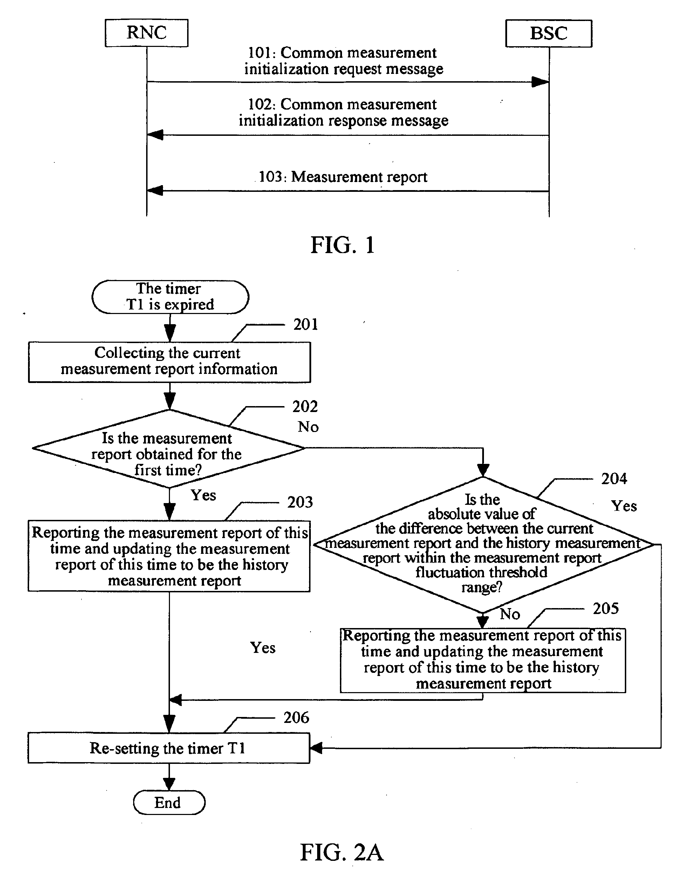

In examples of the present invention, the RNC of the Universal Mobile Telecommunications System (UMTS) actively initiates the common measurement relative to the IUR-G interface, and requests the BSC to report the load information of the specified BSC cell. As shown in FIG. 1, the particular steps are as follows:
step S101, the RNC sends the common measurement initialization request message to the BSC through the IUR-G interface to initiate the load measurement process of the BSC specified cell.

Said measurement initialization request message includes the specified BSC cell identifier and the measurement object type as the load information.

In order to reduce the message amount reported by the measurement report, the present invention adds the measurement report fluctuation threshold field into the measurement initialization request message, this field is used for setting the judgment condition of reporting the measurement report, and when the absolute value of the difference between the current measurement report and the last measurement report is greater than or equal to this field value, the BSC reports the current measurement report.

In order to reduce the frequency of reporting the measurement report, the present invention adds the measurement reporting period field into the measurement initialization request message, and this field is used for setting the minimal period of reporting the measurement report.

In order to avoid the unconsistency of the measurement reports of the reporting party and the receiving party in the abnormal case, the present invention adds the measurement reporting long period field into the measurement initialization request message, and this field is used for compulsorily reporting the measurement report and compulsorily re-starting the timer corresponding to the measurement reporting period and the timer corresponding to the measurement reporting long period when the long period is up. The measurement reporting long period is greater than or equal to the measurement reporting period.

The following table lists the added fields in the common measurement initialization request message in the present invention.

| Field name | Value description |
|---|---|
| Measurement report fluctuation threshold | The absolute value of measurement report fluctuation, deciding whether the current measurement report need to be reported according to the relationship of the absolute value of the difference between the current measurement report and the last reported measurement report with this threshold |
| Measurement reporting period | The minimal period of reporting the measurement report, when this period is expired, or before this period is expired, the measurement reporting party judging whether to report the measurement report |
| Measurement reporting long period | Optional field, the maximal period of reporting the measurement report, the measurement report should be reported when this period is expired. |

Step S102, the BSC sends the common measurement initialization response message to the RNC after receiving the common measurement initialization request message;
in this step, the timer T1 is started according to the measurement reporting period field, the timer T2 is started according to the measurement reporting long period field, and the local measurement information is initialized, for example, the history measurement information reference value is set to zero.

Step S103, when the absolute value of the difference between the current measurement report value and the history measurement report value is greater than or equal to the measurement report fluctuation threshold, the current measurement report is reported.

FIG. 2A is the process of reporting the measurement report under the control of the timer T1 according to the present invention, and the particular steps comprise:
step 201, the current measurement report information is collected;
when the period of the timer T1 is expired, the BSC collects the measurement report information of the current specified BSC cell. In the present invention, the step of collecting the current measurement report can be independent of the process of reporting the measurement report under the control of the timer T1, for example, the system can set one timer of which the period is less than or equal to the measurement reporting period or the current latest measurement report is obtained in real-time via the event triggering way, and the current latest measurement report is taken as the current measurement report for reporting adjustment in the subsequent steps.

Step 202, it is judged whether it is the measurement report obtained for the first time by the measurement reporting party; if yes, step 203 is performed; or else, step 204 is performed;
in order to be able to report the measurement report in time after completing the initialization, the present invention preferably adds the step of the judgment processing when the measurement report is obtained for the first time, thereby reporting and updating the local history record in time when the measurement report is obtained for the first time.

Step 203, the measurement report of this time is reported, and the measurement report of this time is updated to be the history measurement report, and then step 206 is performed;
step 204, it is judged whether the absolute value of the difference between the current measurement report and the history measurement report is within the measurement report fluctuation threshold range, if yes, step 206 is performed; or else step 205 is performed;
the absolute value of the difference between the current measurement report and the history measurement report is calculated, if the absolute value of the difference is greater than or equal to the measurement report fluctuation threshold, it is decided to report the measurement report, and at the same time, the new measurement report is set as the history measurement information reference value.

Step 205, the measurement report of this time is reported, and the measurement report of this time is updated to be the history measurement report;
step 206, the timer T1 is re-set;
in order to implement the cyclical detection and start the detection on the basis of the new measurement report, this step is required to re-set the timer T1 according to the measurement reporting period field.

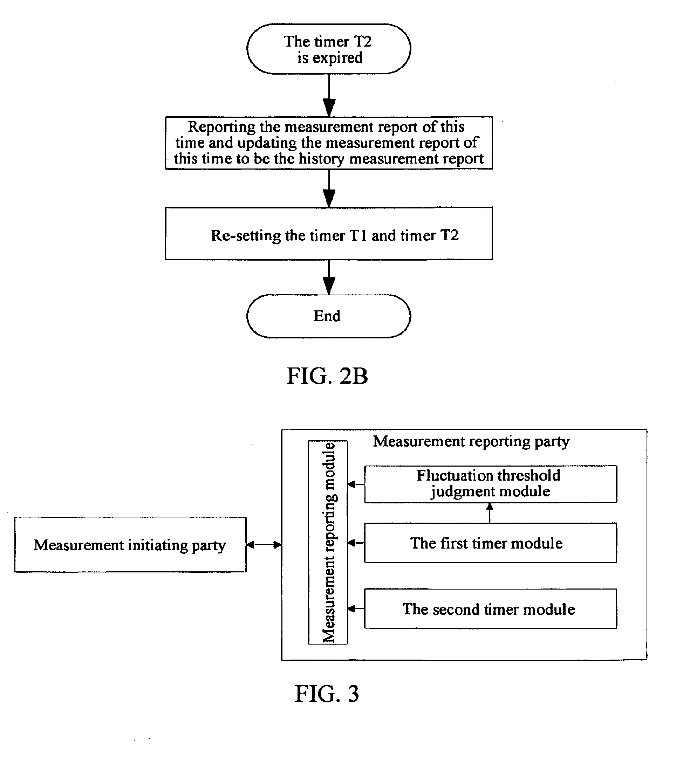

FIG. 2B is flow chart of measurement report processing triggered by the timer T2 corresponding to the long period according to the present invention, which particularly comprises:
step 2B01, when the period of the timer T2 is expired, the local current measurement report is reported to the RNC no matter whether the absolute value of the difference between the current measurement report and the history measurement report is within the measurement report fluctuation threshold range, and at the same time, the local current measurement report is updated to be the local history measurement report value;
step 2B02, the timer T1 corresponding to the measurement report period and the timer T2 corresponding to the measurement report long period are re-started.

FIG. 3 is a logical structure diagram of the system for reporting a measurement report between network elements according to the present invention, the system comprises a measurement initiating party and a measurement reporting party, and the measurement initiating party notifies the measurement report fluctuation threshold field, the measurement reporting period field and the measurement reporting long period field to the reporting party. One preferable example of the present invention only use the fluctuation threshold field as the reporting triggering condition, the fluctuation threshold judgment module judges whether the difference between the current measurement report and the history measurement report is within the fluctuation threshold range, if not within the fluctuation threshold range, the fluctuation threshold judgment module notifies the measurement reporting module to report the current measurement report to the measurement initiating party. In another preferable example of the present invention, the measurement reporting party further comprises the first timer module, the timing period of this timer is set as the value of the measurement reporting period field, and when the timing period is expired, the fluctuation threshold judgment module is triggered to perform; in the other preferable example of the present invention, the measurement party further comprises the second timer module besides the first timer module, the timing period of this timer is set as the value of the measurement reporting long period field, and when the timing period is expired, it compulsorily notifies to report the current measured measurement report.

As a conclusion, the above examples of the present invention not only can reduce the message amount of the measurement report message, but also can make the measurement initiating party more accurately obtain the measurement value of the measurement object by applying the long and short periods and the allowed fluctuation interval of the measurement report in this measurement reporting method.

The above description is only the preferable examples of the present invention, which is not for limiting the protection scope of the present invention.

## Claims

1. A method for reporting a measurement report between network elements, comprising:
a measurement initiating party sending (101) an initialization request message to a measurement reporting party,
**characterized in that**
said initialization request message carries a measurement report fluctuation threshold field, a measurement reporting period field and a measurement reporting long period field, wherein the measurement reporting long period is greater than or equal to the measurement reporting period; and
the method further comprises:
the measurement reporting party collecting (201) measurement report information when the measurement reporting period is expired or before the measurement reporting period is expired every time, judging (204) whether the difference between a current measurement report and a history measurement report maintained in local is within a measurement report fluctuation threshold range when the measurement reporting period is expired, and if yes, the measurement reporting party not reporting this measurement report to the measurement initiating party when the measurement reporting period is expired; or else the measurement reporting party reporting (205) the measurement report to the measurement initiating party when the measurement reporting period is expired, and meanwhile, updating (205) a value of said measurement initiating party into the history measurement report maintained in local; and
the measurement reporting party reporting the measurement report to the measurement initiating party when the measurement reporting long period is expired every time no matter whether the difference between the current measurement report and the history measurement report is within the measurement report fluctuation threshold range.

2. The method as claimed in claim 1, further comprising directly reporting the current measurement report if said current measurement report is a measurement report obtained by the measurement reporting party for a first time, and setting the current measurement report as the history measurement report.

3. A system for reporting a measurement report between network elements, comprising a measurement reporting party and a measurement initiating party; wherein
said measurement initiating party is configured to send an initialization request message to the measurement reporting party;
**characterized in that**
said initialization request message carries a measurement report fluctuation threshold field, a measurement reporting period field and a measurement reporting long period field; and
said measurement reporting party comprises:
a fluctuation threshold judgment module, which is configured to judge (204) whether a difference between a current measurement report and a history measurement report is within a set measurement report fluctuation threshold range according to a value of the measurement report fluctuation threshold field in said initialization request message;
a first timer module, which is configured to periodically trigger said fluctuation threshold judgment module to work according to a measurement report reporting period set by said measurement reporting period field;
a measurement reporting module, which is configured to report (205) a measurement report when the difference between the current measurement report and the history measurement report is not within the set measurement report fluctuation threshold range, and meanwhile, set a current measured current measurement report as the history measurement report; and
a second timer module, which is configured to periodically trigger said measurement reporting module to compulsorily report the current measurement report according to a measurement report reporting long period set by said measurement reporting long period field.

4. A network element, **characterized by** comprising
a fluctuation threshold judgment module, which is configured to judge (204) whether a difference between a current measurement report and a history measurement report is within a set measurement report fluctuation threshold range according to a value of the measurement report fluctuation threshold field in an initialization request message sent by a measurement initiating party;
a first timer module, which is configured to periodically trigger said fluctuation threshold judgment module to work according to a measurement report reporting period set by said measurement reporting period field;
a measurement reporting module, which is configured to report (205) a measurement report when the difference between the current measurement report and the history measurement report is not within the set measurement report fluctuation threshold range, and meanwhile, set a current measured current measurement report as the history measurement report; and
a second timer module, which is configured to periodically trigger said measurement reporting module to compulsorily report the current measurement report according to a measurement report reporting long period set by said measurement reporting long period field.

## Patentansprüche

1. Verfahren zum Berichten eines Messberichts zwischen Netzelementen, das umfasst, dass:
eine Messungsinitüerungsseite eine Initialisierungsanforderungsnachricht an eine Messungsberichterstattungsseite sendet (101),
**dadurch gekennzeichnet, dass**
die Initialisierungsanforderungsnachricht ein Messberichtschwankungsschwellenwertfeld, ein Feld einer Messungsberichterstattungsperiode und ein Feld einer langen Messungsberichterstattungsperiode mitführt, wobei die lange Messungsberichterstattungsperiode größer als die oder gleich der Messungsberichterstattungsperiode ist; und
wobei das Verfahren ferner umfasst, dass:
die Messungsberichterstattungsseite jedes Mal eine Messberichtinformation erfasst (201), wenn die Messungsberichterstattungsperiode abgelaufen ist oder bevor die Messungsberichterstattungsperiode abgelaufen ist, beurteilt wird (204), ob die Differenz zwischen einem aktuellen Messbericht und einem Messbericht der Vergangenheit, der lokal geführt wird, innerhalb eines Messberichtschwankungsschwellenwertbereichs liegt, wenn die Messungsberichterstattungsperiode abgelaufen ist, und wenn dies der Fall ist, die Messungsberichterstattungsseite diesen Messbericht nicht an die Messungsinitiierungsseite berichtet, wenn die Messungsberichterstattungsperiode abgelaufen ist; oder andernfalls die Messungsberichterstattungsseite den Messbericht an die Messungsinitiierungsseite berichtet (205), wenn die Messungsberichterstattungsperiode abgelaufen ist, und unterdessen ein Wert der Messungsinitiierungsseite in dem lokal geführten Messbericht der Vergangenheit aktualisiert wird (205); und
die Messungsberichterstattungsseite den Messbericht jedes Mal, wenn die lange Messungsberichterstattungsperiode abgelaufen ist, an die Messungsinitiierungsseite berichtet, ungeachtet dessen, ob die Differenz zwischen dem aktuellen Messbericht und dem Messbericht der Vergangenheit innerhalb des Messberichtschwankungsschwellenwertbereichs liegt.

2. Verfahren nach Anspruch 1,
das ferner umfasst, dass der aktuelle Messbericht direkt berichtet wird, wenn der aktuelle Messbericht ein Messbericht ist, der zum ersten Mal durch die Messungsberichterstattungsseite erhalten wird, und der aktuelle Messbericht als der Messbericht der Vergangenheit festgelegt wird.

3. System zum Berichten eines Messberichts zwischen Netzelementen, umfassend eine Messungsberichterstattungsseite und eine Messungsinitiierungsseite; wobei
die Messungsinitiierungsseite ausgestaltet ist, um eine Initialisierungsanforderungsnachricht an die Messungsberichterstattungsseite zu senden; **dadurch gekennzeichnet, dass**
die Initialisierungsanforderungsnachricht ein Messberichtschwankungsschwellenwertfeld, ein Feld einer Messungsberichterstattungsperiode und ein Feld einer langen Messungsberichterstattungsperiode mitführt; und wobei die Messungsberichterstattungsseite umfasst:
ein Schwankungsschwellenwertbeurteilungsmodul, das ausgestaltet ist, um gemäß einem Wert des Messberichtschwankungsschwellenwertfelds in der Initialisierungsanforderungsnachricht zu beurteilen, ob eine Differenz zwischen einem aktuellen Messbericht und einem Messbericht der Vergangenheit innerhalb eines festgelegten Messberichtschwankungsschwellenwertbereichs liegt (204);
ein erstes Timer-Modul, das ausgestaltet ist, um das Schwankungsschwellenwertbeurteilungsmodul periodisch auszulösen, um gemäß einer durch das Feld einer Messungsberichterstattungsperiode festgelegten Messberichtberichterstattungsperiode zu arbeiten;
ein Messungsberichterstattungsmodul, das ausgestaltet ist, um einen Messbericht zu berichten (205), wenn die Differenz zwischen dem aktuellen Messbericht und dem Messbericht der Vergangenheit nicht innerhalb des festgelegten Messberichtschwankungsschwellenwertbereichs liegt, und unterdessen einen aktuellen gemessenen aktuellen Messbericht als den Messbericht der Vergangenheit festzulegen; und
ein zweites Timer-Modul, das ausgestaltet ist, um das Messungsberichterstattungsmodul zum obligatorischen Berichten des aktuellen Messberichts gemäß einer durch das Feld einer langen Messungsberichterstattungsperiode festgelegten langen Messberichtberichterstattungsperiode periodisch auszulösen.

4. Netzelement,
**gekennzeichnet durch**:
ein Schwankungsschwellenwertbeurteilungsmodul, das ausgestaltet ist, um gemäß einem Wert des Messberichtschwankungsschwellenwertfelds in einer Initialisierungsanforderungsnachricht, die **durch** eine Messungsinitüerungsseite gesendet wird, zu beurteilen, ob eine Differenz zwischen einem aktuellen Messbericht und einem Messbericht der Vergangenheit innerhalb eines festgelegten Messberichtschwankungsschwellenwertbereichs liegt (204);
ein erstes Timer-Modul, das ausgestaltet ist, um das Schwankungsschwellenwertbeurteilungsmodul periodisch auszulösen, um gemäß einer **durch** das Feld einer Messungsberichterstattungsperiode festgelegten Messberichtberichterstattungsperiode zu arbeiten;
ein Messungsberichterstattungsmodul, das ausgestaltet ist, um einen Messbericht zu berichten (205), wenn die Differenz zwischen dem aktuellen Messbericht und dem Messbericht der Vergangenheit nicht innerhalb des festgelegten Messberichtschwankungsschwellenwertbereichs liegt, und unterdessen einen aktuellen gemessenen aktuellen Messbericht als den Messbericht der Vergangenheit festzulegen; und
ein zweites Timer-Modul, das ausgestaltet ist, um das Messungsberichterstattungsmodul zum obligatorischen Berichten des aktuellen Messberichts gemäß einer **durch** das Feld einer langen Messungsberichterstattungsperiode festgelegten langen Messberichtberichterstattungsperiode periodisch auszulösen.

## Revendications

1. Procédé de fourniture d'un rapport de mesure entre des éléments de réseau, comprenant l'étape consistant à :
envoyer (101), par une partie provoquant la mesure, un message de demande d'initialisation à une partie fournissant la mesure ;
**caractérisé en ce que** :
ledit message d'initialisation comporte une zone de seuil de fluctuation des rapports de mesure, une zone de période de fourniture de mesure et une zone de longue période de fourniture de mesure, dans lequel la longue période de fourniture de mesure est égale ou supérieure à la période de fourniture de mesure ; et
le procédé comprenant en outre les étapes consistant à :
recueillir (201), par la partie fournissant la mesure, des informations de rapport de mesure lorsque la période de fourniture de mesure a expiré ou avant que la période de fourniture de mesure ait expiré à chaque fois, déterminer (204) si la différence entre un rapport de mesure courant et un rapport de mesure historique conservé en local est comprise dans la plage de seuil de fluctuation des rapports de mesure lorsque la période de fourniture de mesure a expiré et, si tel est le cas, ne pas fournir ce rapport de mesure à la partie provoquant la mesure par la partie fournissant la mesure lorsque la période de fourniture de mesure a expiré ou bien, sinon, fournir (205) le rapport de mesure à la partie provoquant la mesure par la partie fournissant la mesure lorsque la période de fourniture de mesure a expiré et, pendant ce temps, mettre à jour (205) une valeur de ladite partie provoquant la mesure dans le rapport de mesure historique conservé en local ; et
fournir le rapport de mesure à la partie provoquant la mesure par la partie fournissant la mesure lorsque la longue période de fourniture de mesure a expiré à chaque fois, que la différence entre le rapport de mesure courant et le rapport de mesure historique soit ou non comprise dans la plage de seuil de fluctuation des rapports de mesure.

2. Procédé selon la revendication 1, comprenant en outre l'étape consistant à fournir directement le rapport de mesure courant si ledit rapport de mesure courant est un rapport de mesure obtenu par la partie fournissant la mesure pour une première fois, et définir le rapport de mesure courant comme rapport de mesure historique.

3. Système de fourniture d'un rapport de mesure entre des éléments de réseau, comprenant une partie fournissant la mesure et une partie provoquant la mesure, dans lequel :
ladite partie provoquant la mesure est configurée pour envoyer un message de demande d'initialisation à la partie fournissant la mesure ;
**caractérisé en ce que** :
ledit message d'initialisation comporte une zone de seuil de fluctuation des rapports de mesure, une zone de période de fourniture de mesure et une zone de longue période de fourniture de mesure ; et
ladite partie fournissant la mesure comprend :
un module de détermination de seuil de fluctuation, qui est configuré pour déterminer (204) si une différence entre un rapport de mesure courant et un rapport de mesure historique est comprise dans une plage de seuil de fluctuation des rapports de mesure définie en fonction d'une valeur de la zone de seuil de fluctuation des rapports de mesure dans ledit message de demande d'initialisation ;
un premier module compteur de temps qui est configuré pour déclencher périodiquement le fonctionnement dudit module de détermination de seuil de fluctuation en fonction d'une période de fourniture de rapport de mesure définie par ladite zone de période de fourniture de mesure ;
un module de fourniture de mesure qui est configuré pour fournir (205) un rapport de mesure lorsque la différence entre le rapport de mesure courant et le rapport de mesure historique n'est pas comprise dans la plage de seuil de fluctuation des rapports de mesure définie et, pendant ce temps, définir un rapport de mesure courant mesuré couramment comme rapport de mesure historique ; et
un second module compteur de temps qui est configuré pour déclencher périodiquement ledit module de fourniture de mesure afin qu'il fournisse obligatoirement le rapport de mesure courant en fonction d'une longue période de fourniture de rapport de mesure définie par ladite zone de longue période de fourniture de mesure.

4. Élément de réseau **caractérisé en ce qu'**il comprend :
un module de détermination de seuil de fluctuation, qui est configuré pour déterminer (204) si une différence entre un rapport de mesure courant et un rapport de mesure historique est comprise dans une plage de seuil de fluctuation des rapports de mesure définie en fonction d'une valeur de la zone de seuil de fluctuation des rapports de mesure dans un message de demande d'initialisation envoyé par une partie provoquant la mesure ;
un premier module compteur de temps qui est configuré pour déclencher périodiquement le fonctionnement dudit module de détermination de seuil de fluctuation en fonction d'une période de fourniture de rapport de mesure définie par ladite zone de période de fourniture de mesure ;
un module de fourniture de mesure qui est configuré pour fournir (205) un rapport de mesure lorsque la différence entre le rapport de mesure courant et le rapport de mesure historique n'est pas comprise dans la plage de seuil de fluctuation des rapports de mesure définie et, pendant ce temps, définir un rapport de mesure courant mesuré couramment comme rapport de mesure historique ; et
un second module compteur de temps qui est configuré pour déclencher périodiquement ledit module de fourniture de mesure afin qu'il fournisse obligatoirement le rapport de mesure courant en fonction d'une longue période de fourniture de rapport de mesure définie par ladite zone de longue période de fourniture de mesure.
